(19) Europäisches Patentamt
European Patent Office
Office européen des brevets

(11) **EP 1 130 790 B1**

(12) **FASCICULE DE BREVET EUROPEEN**

(45) Date de publication et mention
de la délivrance du brevet:
**28.11.2007 Bulletin 2007/48**

(51) Int Cl.:
*H04B 1/04* (2006.01)     *H04B 1/52* (2006.01)

(21) Numéro de dépôt: **01400138.2**

(22) Date de dépôt: **18.01.2001**

(54) **Filtrage à l'émission pour un dispositif émetteur/récepteur de signaux radiofréquences.**

Transmissionsfilter für ein Sende-empfangsgerät

Transmission filter for a RF transceiver

(84) Etats contractants désignés:
**AT BE CH CY DE DK ES FI FR GB GR IE IT LI LU MC NL PT SE TR**

(30) Priorité: **20.01.2000 FR 0000675**

(43) Date de publication de la demande:
**05.09.2001 Bulletin 2001/36**

(73) Titulaire: **Alcatel Lucent**
**75008 Paris (FR)**

(72) Inventeur: **Guerlin, Jean-Pierre**
**95130 Le Plessis Bouchard (FR)**

(74) Mandataire: **Korakis-Ménager, Sophie et al**
**Alcatel Lucent**
**Intellectual Property & Standards**
**54 rue La Boétie**
**75008 Paris (FR)**

(56) Documents cités:
**EP-A- 0 944 175      US-A- 4 422 047**
**US-A- 5 930 688**

**Description**

La présente invention concerne un dispositif et un procédé de filtrage dans la chaîne émission d'un dispositif émetteur/récepteur de signaux radiofréquences, destinés à réduire les signaux parasites dus au bruit.

Les dispositifs émetteurs/récepteurs plus particulièrement concernés par la présente invention sont ceux susceptibles d'émettre des signaux radiofréquences dont la fréquence porteuse se situe dans une première bande de fréquences TX, et de recevoir des signaux radiofréquences dont la fréquence porteuse se situe dans une seconde bande de fréquences RX distincte de la première, par exemple ceux équipant les téléphones mobiles fonctionnant dans un réseau de radiocommunications cellulaire numérique.

Le document EP 0 944 175 A1 divulgue un tel émetteur/récepteur avec un dispositif de filtrage avec une bande d'atténuation dans la bande de fréquences RX. Le dispositif de filtrage ce situé avant un moyens d'amplification de puissance.

Dans l'exemple non limitatif où le réseau de radiocommunications considéré est le réseau paneuropéen GSM (initiales anglo-saxonnes mises pour Global System for Mobile communications), la bande de transmission TX se situe entre 880 et 915 MHz, et la bande de réception RX se situe entre 925 et 960 MHz. Chacune de ces bandes TX, RX est en outre divisée en canaux de transmission Ct ou de réception Cx à raison d'un canal tous les 200 KHz. En conversation notamment, un téléphone mobile émet sur l'un de canaux Ct de la bande TX vers une station de base du réseau, et reçoit depuis cette station la voix de son interlocuteur sur l'un des canaux Cr de la bande RX. Les canaux Ct et Cr sont alloués ponctuellement par le réseau en fonction des conditions d'utilisation du téléphone, et sont susceptibles de changer au cours d'une même communication.

Il importe de contenir autant que possible le spectre du signal d'émission au sein d'un canal Ct alloué, et notamment de ne pas laisser le spectre d'émission s'étendre aux fréquences de la bande de réception RX.

Or, la chaîne d'émission d'un téléphone mobile comporte, en aval de moyens de génération du signal proprement dit à transmettre, des moyens d'amplification de la puissance de ce signal. Ces moyens d'amplification constituent un système non-linéaire, générateur de signaux parasites dont la fréquence porteuse peut malencontreusement se retrouver dans la bande de réception RX. A titre d'exemple quantitatif, si la fréquence porteuse $F_0$ du signal à transmettre est égale à 915 Mhz, et que le bruit en entrée du système d'amplification de puissance présente une fréquence $F_b$ égale à 905 MHz, le système d'amplification génèrera en sortie, outre un signal amplifié à la fréquence porteuse $F_0$ :

- un signal à la fréquence $2F_b - F_0$, soit 895 MHz. Un tel signal ne tombe pas dans la bande RX, et possède de toutes façons une amplitude négligeable. Pour cette raison, on ne s'y intéressera pas dans la suite de l'exposé ;
- un signal à la fréquence $2F_0 - F_b$, soit 925 MHz, tombant dans la bande RX, et qu'il faut de ce fait obligatoirement supprimer pour respecter la norme GSM;

Une première solution pour se débarrasser de ces signaux parasites, ou tout du moins les atténuer, consiste à placer, en aval des moyens d'amplification de puissance, un filtre de réjection, souvent placé au niveau d'un duplexeur dont le rôle est d'isoler la chaîne d'émission (avant l'antenne) de la chaîne de réception (après cette même antenne). Une telle solution est utilisée lorsque les moyens de génération de signal de la chaîne émission génèrent un bruit à large bande. L'inconvénient majeur d'une telle solution est que le duplexeur est un élément coûteux en terme d'encombrement. En outre, un filtre de réjection introduit des pertes d'insertion. De ce fait, pour pouvoir émettre au niveau de l'antenne un signal d'une puissance suffisante telle qu'imposée par la norme, il est nécessaire d'augmenter le gain des moyens d'amplification de puissance. Cela se traduit par une augmentation de la consommation de l'émetteur, et par là même, d'une réduction de la durée de fonctionnement en veille ou en communication du téléphone mobile.

Une seconde solution consiste à utiliser comme moyens de génération du signal à transmettre en amont des moyens d'amplification de puissance, un générateur de signal modulé à très faible bruit, générant de ce fait un bruit à bande étroite. De la sorte, les signaux parasites qui pourraient être générés par les moyens d'amplification de puissance seraient à un niveau si faible qu'il ne serait pas nécessaire de les filtrer. Cependant, l'utilisation d'un générateur à très faible bruit est coûteuse, et limitée à des modulations à enveloppe constante.

La présente invention a pour but de pallier les inconvénients précédents en proposant un dispositif de filtrage adapté au cas où les moyens de génération génèrent un bruit large bande, et ne nécessitant pas l'utilisation d'un duplexeur, ni d'un générateur à très faible bruit.

Ce but est atteint selon l'invention grâce à un dispositif de filtrage dans une chaîne d'émission d'un dispositif émetteur/récepteur émettant des signaux radiofréquences à une fréquence porteuse comprise dans une première bande de fréquences et recevant des signaux radiofréquences dans une seconde bande de fréquences distincte de la première bande de fréquences, ladite chaîne d'émission comprenant des moyens de génération d'un signal à transmettre à ladite fréquence porteuse et des moyens d'amplification de puissance dudit signal délivrant, outre un signal amplifié à transmettre à la fréquence porteuse, un signal parasite dont la fréquence dépend de la fréquence porteuse et de la fréquence d'un signal de bruit, caractérisé en ce qu'il comprend , situé entre lesdits moyens de génération du signal à transmettre et lesdits moyens d'amplification de puissance, des moyens de filtrage définis de manière à ce que la fréquence dudit signal parasite soit exclus de la seconde bande de fréquences.

La présente invention a également pour objet un procédé de filtrage dans une chaîne d'émission d'un dispositif émetteur/récepteur émettant des signaux radiofréquences à une fréquence porteuse comprise dans une première bande de fréquences et recevant des signaux radiofréquences dans une seconde bande de fréquences distincte de la première bande de fréquences, ladite chaîne d'émission comprenant des moyens de génération d'un signal à transmettre à ladite fréquence porteuse et des moyens d'amplification de puissance dudit signal délivrant, outre un signal amplifié à transmettre à la fréquence porteuse, un signal parasite dont la fréquence dépend de la fréquence porteuse et de la fréquence d'un signal de bruit, caractérisé en ce qu'il consiste, en amont desdits moyens d'amplification de puissance, à filtrer les signaux de manière à ce que la fréquence dudit signal parasite soit exclus de la seconde bande de fréquences.

La présente invention sera mieux comprise au vu de la description suivante, faite en référence aux figures annexées dans lesquelles :

- la figure 1 est un schéma fréquentiel illustrant le principe de l'invention dans le cas non limitatif où le dispositif émetteur/récepteur est dans un téléphone de radiocommunications de type GSM (la bande TX étant dans ce cas inférieure à la bande RX), et où les moyens de filtrage utilisent trois filtres passe-bande ;
- la figure 2 est un synoptique simplifié illustrant une architecture possible d'un dispositif émetteur/récepteur implémentant l'invention ;
- la figure 3 représente le gabarit minimum que doivent respecter les filtres selon l'invention ;
- la figure 4 illustre le principe de l'invention dans le cas où la bande TX est supérieure à la bande RX, et où les moyens de filtrage utilisent des filtres passe-bande .

Avant de décrire le filtrage effectué selon l'invention, il convient au préalable d'expliquer pour quelle raison il est possible de se débarrasser des fréquences parasites en effectuant un filtrage à l'entrée des moyens d'amplification, c'est-à-dire avant que ces fréquences parasites ne soient effectivement générées :

Comme cela a déjà été spécifié plus haut, si l'on note $F_0$ la fréquence porteuse du signal à l'entrée des moyens d'amplification, et $F_b$ la fréquence du bruit, les fréquences de bruit générées en sortie des moyens d'amplification et dues aux termes de troisième ordre (série de Taylor modélisant tout système non-linéaire) s'écrivent d'une part, $2F_b - F_0$ et d'autre part, $2F_0 - F_b$.

Si à présent l'on considère que la bande de fréquences du bruit en entrée des moyens d'amplification de puissance est bornée par une valeur inférieure notée $F_{BINF}$ et par une valeur supérieure notée $F_{BSUP}$, et que la fréquence porteuse $F_0$ du signal utile est elle-même comprise dans cette même bande, alors, les fréquences de bruit possibles en sortie des moyens d'amplifications peuvent appartenir aux deux bandes $[2F_{BiNF} - F_0 ; 2F_0 - F_{BSUP}]$ et $[2F_0 - F_{BINF} ; 2F_{BSUP} - F_0]$.

Il résulte des relations précédentes qu'il revient au même d'effectuer un filtrage du bruit en entrée des moyens d'amplification de puissance sur une bande de fréquences donnée que d'effectuer un filtrage du bruit en sortie des moyens d'amplification de puissance sur les deux bandes de fréquences correspondantes.

Selon un premier mode de réalisation possible de l'invention, on prévoit un ensemble de plusieurs (au moins deux) filtres passe-bande connectés en parallèle, dont les caractéristiques seront explicitées ci-après ; il faut alors sélectionner parmi ces filtres celui qu'il faut effectivement utiliser en fonction de la valeur de la fréquence porteuse du signal à transmettre.

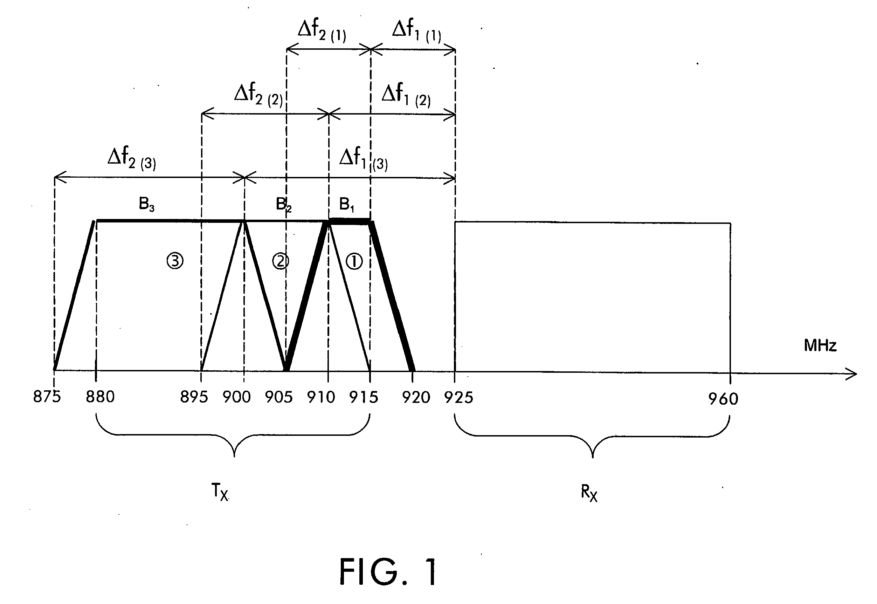

La figure 1 illustre le principe de l'invention dans le cas où l'on a choisi un ensemble de trois filtres passe-bande. Sur cette figure 1, on a représenté sur l'axe horizontal des fréquences les bandes TX et RX respectivement d'émission et de réception dans le cas non limitatif du GSM. Chacun des filtres passe-bande présentent un gabarit ①, ② ou ③ sur la figure présentant :

- une largeur de bande Bi (i = 1, 2 ou 3) à 0 décibel d'atténuation (dans la suite dénommée bande passante) délimitée par une fréquence $F_{iSUP}$ représentant la plus grande fréquence utile non filtrée par le filtre i et par une fréquence $F_{iINF}$ représentant la plus petite fréquence utile non filtrée par le filtre i;
- une borne inférieure de fréquence $F_{BiINF}$ au-dessous de laquelle l'atténuation est par exemple de 30 décibels ;
- une borne supérieure de fréquence $F_{BiSUP}$ au-dessus de laquelle l'atténuation est également de 30 décibels .

Pour fixer les idées, le tableau ci-après donnent les valeurs de ces différents paramètres en correspondance avec la figure 1 :

| | $B_i$ | | $F_{BiINF}$ | $F_{BiSUP}$ |
|---|---|---|---|---|
| | $F_{iINF}$ | $F_{iSUP}$ | | |
| i = 1 | 910 MHz | 915 MHz | 905 MHz | 920 MHz |
| i = 2 | 900 MHz | 910 MHz | 895 MHz | 915 MHz |
| i = 3 | 880 MHz | 900 MHz | 875 MHz | 905 MHz |

Les trois filtres passe-bande sont déterminés selon l'invention de manière à répondre aux exigences suivantes :

- d'une part, la totalité de la bande d'émission TX doit être couverte par la somme des bandes passantes des trois filtres . Dans l'exemple choisi, la condition est respectée puisque $B_1 + B_2 + B_3$ couvre exactement la bande TX (on pourrait cependant avoir des bandes qui se superposent partiellement, du moment que la totalité de la bande TX soit couverte);
- d'autre part, on doit respecter pour chaque filtre i, la relation ci-après :

$$\Delta f_{1(i)} \geq \Delta f_{2(i)}$$

dans laquelle :

- $\Delta f_{1(i)}$ représente la différence entre la plus faible fréquence de la bande de fréquences de réception RX (dans notre exemple 925 MHz) et la plus grande fréquence utile non filtrée $F_{iSUP}$ ; et
- $\Delta f_{2(i)}$ représente la différence entre ladite plus grande fréquence utile non filtrée $F_{iSUP}$ et la borne de fréquence inférieure $F_{BiINF}$ du filtre.

Le tableau ci-après est un récapitulatif montrant que cette dernière relation est bien vérifiée dans l'exemple représenté sur la figure 1, puisque l'on est dans la condition limite de l'égalité :

| | $\Delta f_{1(i)} = 925 - F_{iSUP}$ | $\Delta f_{2(i)} = F_{iSUP} - F_{BiINF}$ |
|---|---|---|
| i = 1 | 925 - 915 = 10 | 915 - 905 = 10 |
| i = 2 | 925 - 910 = 15 | 910 - 895 = 15 |
| i = 3 | 925 - 900 = 25 | 900 - 875 = 25 |

Le filtre qui doit être appliqué au signal à transmettre est choisi selon la fréquence porteuse du signal à transmettre de sorte que cette fréquence porteuse appartienne à la bande passante du filtre. Ainsi :

- Si la fréquence porteuse $F_0$ du signal utile est comprise dans la bande [910 ; 915], le filtre n°1 sera sélectionné, de sorte que la fréquence du bruit en sortie des moyens d'amplification se situera dans la bande [900 ; 925], c'est-à-dire dans une bande distincte de la bande RX ;
- Si la fréquence porteuse $F_0$ du signal utile est comprise dans la bande [900 ; 910], le filtre n°2 sera sélectionné, de sorte que la fréquence du bruit en sortie des moyens d'amplification se situera dans la bande [885 ; 925], c'est-à-dire dans une bande distincte de la bande RX ;
- Si la fréquence porteuse $F_0$ du signal utile est comprise dans la bande [880 ; 900], le filtre n°3 sera sélectionné, de sorte que la fréquence du bruit en sortie des moyens d'amplification se situera dans la bande [850 ; 925], c'est-à-dire dans une bande distincte de la bande RX.

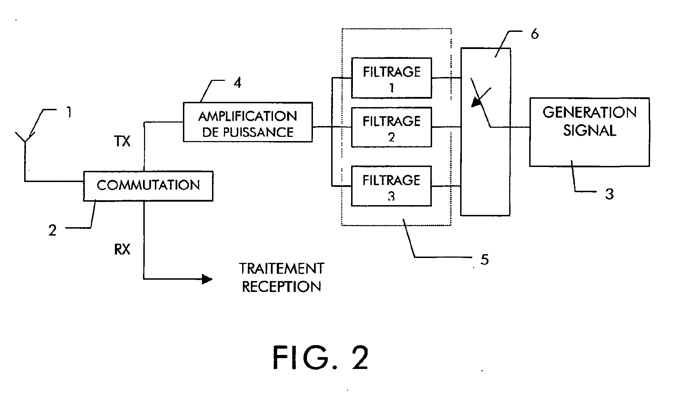

On va à présent décrire, en référence à la figure 2, un synoptique simplifié de la chaîne radio d'un téléphone mobile montrant les différents éléments nécessaires à la réalisation de l'invention :

Une même antenne 1 est utilisée pour la réception de signaux radiofréquences dans la bande de réception RX et pour l'émission de signaux radiofréquences dans la bande d'émission TX. Des moyens de commutation 2 permettent d'orienter soit le signal à transmettre venant de la chaîne d'émission TX en direction de l'antenne, soit le signal reçu par l'antenne 2 vers la chaîne de réception RX. Cette dernière ne sera pas décrite de façon plus détaillée compte tenu de fait qu'elle n'a pas d'incidence sur l'invention. Les moyens de commutation 2 peuvent être constitués d'un simple commutateur commandé par le microprocesseur (non représenté) gérant le fonctionnement global du téléphone.

La chaîne radiofréquence d'émission proprement dite comporte, de façon classique, des moyens 3 de génération du signal utile qui doit être transmis à une fréquence porteuse $F_0$ prédéterminée, et des moyens 4 d'amplification de la puissance de ce signal utile, de façon à délivrer, au niveau de l'antenne, un signal à transmettre à la puissance requise par le réseau (par exemple 2 Watts). Ces moyens ne seront pas décrits de façon plus détaillée ici car ils ne sont pas nécessaires à la compréhension de l'invention, et leur mise en oeuvre est bien connue de l'homme du métier. Le signal en sortie des moyens 3 est un signal modulé selon une modulation GMSK.

Selon l'invention, un ensemble 5 comportant une pluralité de filtres passe-bande (au nombre de trois sur la figure 2) connectés en parallèle est prévu entre les moyens 3 de génération de signal et les moyens 4 d'amplification de puissance du signal généré. Les trois filtres présentent les caractéristiques explicitées précédemment en référence à la figure 1. En outre, selon la valeur de la fréquence porteuse $F_0$ du signal en sortie du générateur 3, on prévoit des moyens 6 de sélection du filtre appartenant à l'ensemble 5 qu'il va falloir appliquer au signal utile issu du générateur.

Dans l'exemple de la figure 2, ces moyens de sélection ont été positionnés entre la sortie du générateur 3 et l'entrée de l'ensemble 5. En variante, on peut prévoir de placer ces moyens de sélection entre la sortie de l'ensemble 5 et l'entrée des moyens 4 d'amplification de puissance.

Dans le mode de réalisation décrit ci-avant en référence à la figure 1, on a considéré que les filtres étaient des filtres passe-bandes. Pour de tels filtres, les fréquences sont complètement filtrées dès lors qu'elles sont inférieures à $F_{BiINF}$ ou supérieure à $F_{BiSUP}$, et atténuées lorsqu'elles se trouvent dans des intervalles des fréquences $[F_{BiINF} ; F_{iINF}]$ ou $[F_{iSUP} ; F_{BiSUP}]$. En réalité, dans le cadre de l'invention, peu importe le comportement du filtre au-delà des fréquences situées dans une plage d'utilisation du filtre correspondant à ce que l'on a défini, dans le cas d'un filtre passe-bande, par la bande passante B; du filtre. Dans un second mode de réalisation, on pourrait très bien considérer que les fréquences situées au-dessus de la plage d'utilisation ne sont pas filtrées. Cela revient à définir, à la place des filtres passe-bande de la figure 1, des filtres passe-haut dont les caractéristiques sont les suivantes :

- Pour le filtre dont la plage d'utilisation est la plus proche de la bande de réception RX :

  - Une borne de fréquence inférieure $F_{BINF}$ ;
  - Une plage d'utilisation $B_i$ débutant à une fréquence $F_{iINF}$ (correspondant à la plus petite fréquence utile non filtrée par le filtre i) et finissant à une fréquence $F_{iSUP}$ correspondant à la plus haute fréquence de la bande d'émission TX.

- Pour les autres filtres :

  - Une borne de fréquence inférieure $F_{BINF}$ ;
  - Une plage d'utilisation $B_i$ débutant à une fréquence $F_{iINF}$ (correspondant à la plus petite fréquence utile non filtrée par le filtre i) et finissant à une fréquence $F_{iSUP}$ correspondant à la plus petite fréquence non filtrée $F_{(i-1)INF}$ du filtre immédiatement adjacent.

Lorsque l'on émet le signal à la fréquence $F_0$, on choisit parmi l'ensemble précédent d'appliquer le filtre dont la plage d'utilisation inclus la fréquence porteuse $F_0$. Tout comme précédemment décrit en relation avec la figure 1, il convient en outre que les filtres passe-haut respectent la relation suivante :

$$\Delta f_{1(i)} \geq \Delta f_{2\,(i)}$$

dans laquelle :

- $\Delta f_{1(i)}$ représente la différence entre la plus faible fréquence de la bande de fréquences de réception RX (dans notre exemple 925 MHz) et la plus grande fréquence utile $F_{iSUP}$ de la plage d'utilisation ; et
- $\Delta f_{2\,(i)}$ représente la différence entre ladite plus grande fréquence utile $F_{iSUP}$ de la plage d'utilisation et la borne de fréquence inférieure $f_{BiINF}$ du filtre.

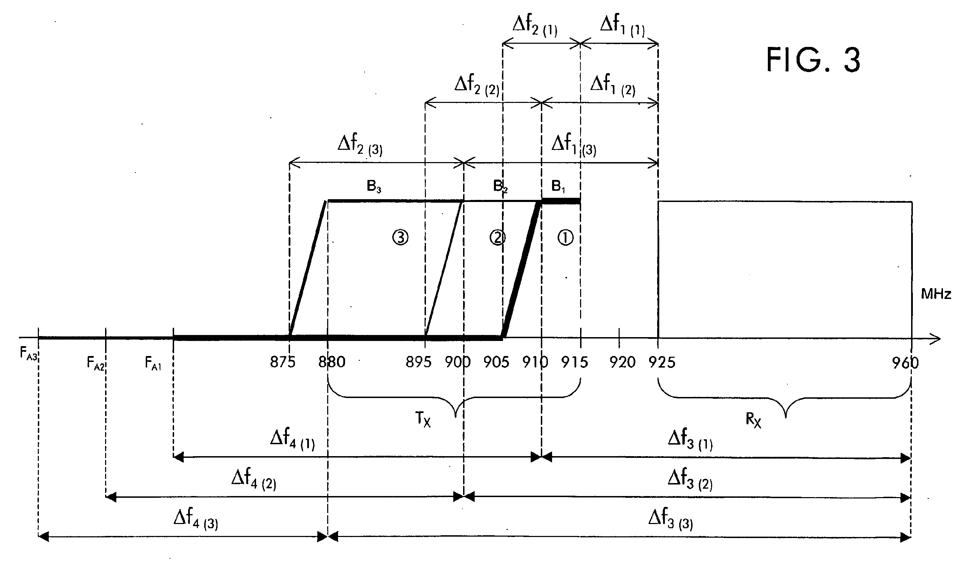

On a décrit précédemment deux modes de réalisation avec des filtres respectivement passe-bande ou passe-haut. On va maintenant présenter, en référence à la figure 3, le cas le plus général, c'est-à-dire le gabarit minimal que doivent respecter les filtres utilisés :

La figure 3 représente trois filtres dont le gabarit minimal est représenté par trois traits d'épaisseur différente. Pour chaque gabarit, on retrouve en partie haute la notion de plage d'utilisation B; (bande passante dans le cas d'un filtre passe-bande), bornée par les fréquences $F_{iINF}$ et $F_{iSUP}$, et la borne de fréquence inférieure $F_{BiINF}$. Les fréquences $F_{iSUP}$ et $F_{BiINF}$ sont telles que la relation suivante doit être respectée, comme déjà expliqué précédemment :

$$\Delta f_{1(i)} \geq \Delta f_{2\ (i)}$$

soit

$$F_{RXMIN} - F_{iSUP} \geq F_{iSUP} - F_{BiINF}$$

Dans les deux modes de réalisation explicités précédemment, on a considéré que toutes les fréquences situées en-dessous de la fréquence $F_{BiINF}$ étaient filtrées. En fait, dans le cas le plus général représenté sur la figure 3, il suffit que les fréquences situées entre une fréquence minimale $F_{Ai}$ et la fréquence $F_{BiINF}$ soient effectivement filtrées. Peu importe le sort réservé aux fréquences situées en-dessous de $F_{Ai}$. Dans l'exemple numérique choisi, les valeurs des fréquences $F_{Ai}$ sont les suivantes :

$F_{A1}$ = 860 Mhz
$F_{A2}$ = 840 MHz
$F_{A3}$ = 800 Mhz

La proposition précédente se traduit par l'inégalité suivante :

$$\Delta f_{4(i)} \geq \Delta f_{3\ (i)}$$

soit

$$F_{iINF} - F_{Ai} \geq F_{RXMAX} - F_{BiINF}$$

En d'autres termes :

- $\Delta f_{3(i)}$ représente la différence entre la plus grande fréquence de la bande de fréquences de réception RX (dans notre exemple 960 MHz) et la plus petite fréquence utile $F_{iINF}$ de la plage d'utilisation ; et
- $\Delta f_{4\ (i)}$ représente la différence entre ladite plus petite fréquence utile $F_{iINF}$ de la plage d'utilisation et la fréquence minimale $F_{Ai}$ (telle que définie précédemment) du filtre.

On remarquera que la figure 3 n'est pas à l'échelle, donnant l'impression que la relation précédente n'est pas vérifiée. Cependant, en remplaçant les différents paramètres par leurs différentes valeurs numériques, on constate que la relation précédente est bien vérifiée .

Il existe une pluralité de structures de filtres qui respectent le gabarit minimal de la figure 3, notamment des filtres passe-bande (voir explications précédentes faite en relation avec la figure 1), des filtres passe-haut (voir également explications précédentes), mais aussi des filtres coupe-bande filtrant les fréquences situées entre $F_{Ai}$ et $F_{iINF}$, et laissant passer toutes les autres fréquences.

Toutes les explications précédentes sont valables dans le cas où la bande d'émission TX est inférieure à la bande de réception RX, comme par exemple pour le système GSM actuel.

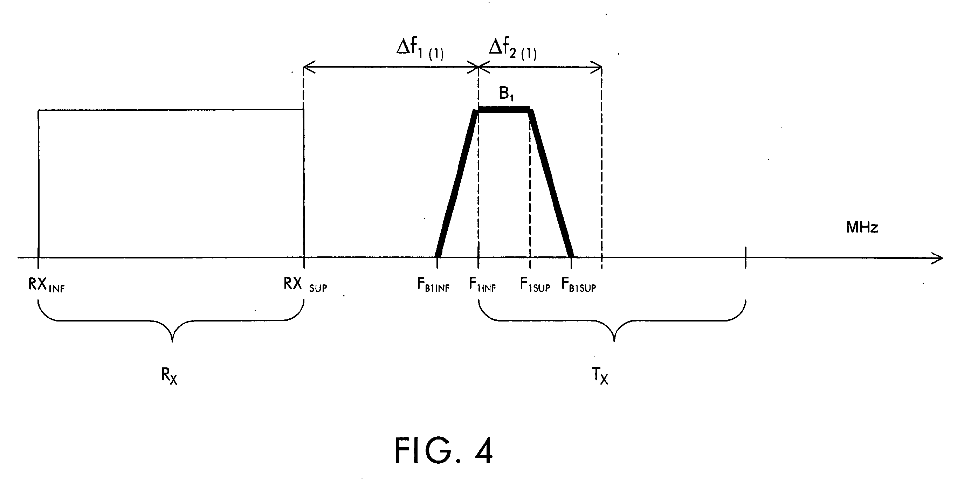

Dans le cas inverse où la bande de réception RX se trouverait être inférieure à la bande d'émission TX, le principe de l'invention reste applicable, mais certains paramètres des filtres changent, comme cela va être explicité à présent en référence à la figure 4. La figure 4 se veut être l'analogue de la figure 1 (mode de réalisation dans lequel les filtres utilisés sont des filtres passe-bande). Cependant, pour ne pas surcharger la figure, on a représenté seulement l'un des trois filtres, à savoir le filtre dont la bande passante $B_1$ était la plus proche de la bande de réception RX :

Tout comme dans le cas de la figure 1, les filtres sont choisis de manière à ce que la totalité de la première bande de fréquences TX soit couverte par la somme des bandes passantes. La différence résulte de ce que chaque filtre est choisi en outre de telle façon que la différence $\Delta f_{1(i)}$ entre la plus petite fréquence utile non filtrée ($F_{iINF}$) et la plus grande fréquence de la seconde bande de fréquences (RX) soit supérieure ou égale à la différence $\Delta f_{2\ (i)}$ entre ladite plus petite fréquence utile non filtrée ($F_{iINF}$) et la borne de fréquence supérieure ($F_{BiSUP}$) du filtre. Bien entendu, le filtre qui doit être appliqué est celui dont la bande passante contient la fréquence porteuse $F_0$ du signal à émettre.

Toujours dans le cas où la bande TX est supérieure à la bande RX, d'autres structures de filtres peuvent être envisagées :

On peut utiliser des filtres passe-bas dont la plage d'utilisation doit correspondre au minimum à la plage $B_i$ définit précédemment (voir figure 4). En effet, peu importe, dans le cadre de l'invention, le sort réservé aux fréquences qui sont situées en deçà de la fréquence $F_{iINF}$.

En outre, il n'est pas non plus nécessaire que toutes les fréquences situées au-dessus de $F_{BiSUP}$ soient filtrées. Seules les fréquences situées entre $F_{BiSUP}$ et $F_{A'i}$ doivent être filtrées, les valeurs de $F_{A'i}$ étant telles que :

$$\Delta f_{4(i)} \geq \Delta f_{3\ (i)}$$

relation dans laquelle :

$$\Delta f_{4(i)} = F_{A'i} - F_{iINF}$$

$$\Delta f_{3\ (i)} = F_{iINF} - RX_{INF}$$

**Revendications**

1. Dispositif de filtrage dans une chaîne d'émission d'un dispositif émetteur/récepteur émettant des signaux radiofréquences à une fréquence porteuse ($F_0$) comprise dans une première bande de fréquences (TX) et recevant des signaux radiofréquences dans une seconde bande de fréquences (RX) distincte de la première bande de fréquences, ladite chaîne d'émission comprenant des moyens (3) de génération d'un signal à transmettre à ladite fréquence porteuse ($F_0$) et des moyens (4) d'amplification de puissance dudit signal délivrant, outre un signal amplifié à transmettre à la fréquence porteuse ($F_0$), un signal parasite dont la fréquence dépend de la fréquence porteuse ($F_0$) et de la fréquence ($F_b$) d'un signal de bruit, **caractérisé en ce qu'**il comprend , situé entre lesdits moyens (3) de génération du signal à transmettre et lesdits moyens (4) d'amplification de puissance, des moyens de filtrage (5, 6) définis de manière à ce que la fréquence dudit signal parasite soit exclus de la seconde bande de fréquences (RX).

2. Dispositif de filtrage selon la revendication 1, **caractérisé en ce que**, la première bande de fréquence (TX) étant inférieure à la seconde bande de fréquence (RX), lesdits moyens de filtrage comportent:

   - un ensemble (5) d'au moins deux filtres passe-bande (i) connectés en parallèle, chaque filtre présentant une bande passante ($B_i$) telle que la totalité de la première bande de fréquences (TX) est couverte par la somme des bandes passantes, chaque filtre étant en outre choisi de telle façon que la différence $\Delta f_{1(i)}$ entre la plus faible fréquence de la seconde bande de fréquences (RX) et la plus grande fréquence utile non filtrée ($F_{iSUP}$) soit supérieure ou égale à la différence $\Delta f_{2(i)}$ entre ladite plus grande fréquence utile non filtrée ($F_{iSUP}$) et la borne de fréquence inférieure ($F_{BiINF}$) du filtre.
   - des moyens (6) de sélection d'un des filtres passe-bande dudit ensemble en fonction de la fréquence porteuse ($F_0$) dudit signal à transmettre.

3. Dispositif de filtrage selon la revendication 1, **caractérisé en ce que**, la première bande de fréquence (TX) étant supérieure à la seconde bande de fréquence (RX), lesdits moyens de filtrage comportent:

   - un ensemble (5) d'au moins deux filtres passe-bande (i) connectés en parallèle, chaque filtre présentant une bande passante ($B_i$) telle que la totalité de la première bande de fréquences (TX) est couverte par la somme des bandes passantes, chaque filtre étant en outre choisi de telle façon que la différence $\Delta f_{1(i)}$ entre la plus

petite fréquence utile non filtrée ($F_{ilNF}$) et la plus grande fréquence de la seconde bande de fréquences (RX) soit supérieure ou égale à la différence $\Delta f_{2(i)}$ entre ladite plus petite fréquence utile non filtrée ($F_{ilNF}$) et la borne de fréquence supérieure ($F_{BiSUP}$) du filtre.

- des moyens (6) de sélection d'un des filtres passe-bande dudit ensemble en fonction de la fréquence porteuse ($F_0$) dudit signal à transmettre.

4. Dispositif de filtrage selon l'une quelconque des revendications précédentes, **caractérisé en ce que** les moyens de sélection choisissent le filtre dont la bande passante ($B_i$) inclus la fréquence porteuse ($F_0$) du signal à transmettre.

5. Dispositif de filtrage selon l'une quelconque des revendications 2 ou 3, **caractérisé en ce que** lesdits moyens (6) de sélection sont placés entre la sortie des moyens (3) de génération et l'entrée dudit ensemble (5).

6. Dispositif de filtrage selon l'une quelconque des revendications 2 ou 3, **caractérisé en ce que** lesdits moyens de sélection sont placés entre la sortie dudit ensemble et l'entrée des moyens d'amplification de puissance.

7. Procédé de filtrage dans une chaîne d'émission d'un dispositif émetteur/récepteur émettant des signaux radiofréquences à une fréquence porteuse (F0) comprise dans une première bande de fréquences (TX) et recevant des signaux radiofréquences dans une seconde bande de fréquences (RX) distincte de la première bande de fréquences, ladite chaîne d'émission comprenant des moyens (3) de génération d'un signal à transmettre à ladite fréquence porteuse (F0) et des moyens (4) d'amplification de puissance dudit signal délivrant, outre un signal amplifié à transmettre à la fréquence porteuse (F0), un signal parasite dont la fréquence dépend de la fréquence porteuse (F0) et de la fréquence (Fb) d'un signal de bruit, **caractérisé en ce qu'**il consiste, en amont desdits moyens (4) d'amplification de puissance, à filtrer les signaux de manière à ce que la fréquence dudit signal parasite soit exclus de la seconde bande de fréquences (RX).

**Claims**

1. A filter system for use in a transmit subsystem of a transceiver transmitting radio frequency signals at a carrier frequency ($F_0$) in a first frequency band (TX) and receiving radio frequency signals in a second frequency band (RX) separate from the first frequency band, said transmit subsystem including generator means (3) for generating a signal to be transmitted at said carrier frequency ($F_0$) and power amplification means (4) for amplifying the power of said signal, said power amplification means delivering, in addition to an amplified signal to be transmitted at the carrier frequency ($F_0$), an unwanted signal whose frequency depends on the carrier frequency ($F_0$) and on the frequency ($F_b$) of a noise signal, which system is **characterised in that** it includes between said generator means (3) for generating the signal to be transmitted and said power amplification means (4) filter means (5, 6) such that the frequency of said unwanted signal is excluded from the second frequency band (RX).

2. A filter system according to claim 1, **characterised in that**, when the first frequency band (TX) is below the second frequency band (RX), said filtering means include:

- a set (5) of at least two band-pass filters (i) connected in parallel and each having a pass-band (Bi) such that the whole of the first frequency band (TX) is covered by the sum of the pass-bands, each filter further being chosen so that the difference $\Delta f_{1(i)}$ between the lowest frequency in the second frequency band (RX) and the highest unfiltered wanted frequency ($F_{iSUP}$) is greater than or equal to the difference $\Delta f_{2(i)}$ between said highest unfiltered wanted frequency ($F_{iSUP}$) and the lower frequency limit ($F_{BilNF}$) of the filter, and
- selector means (6) for selecting one of the band-pass filters of said set according to the carrier frequency ($F_0$) of said signal to be transmitted.

3. A filter system according to claim 1, **characterised in that**, when the first frequency band (TX) is above the second frequency band (RX), said filter means include:

- a set (5) of at least two band-pass filters (i) connected in parallel and each having a pass-band ($B_i$) such that the whole of the first frequency band (TX) is covered by the sum of the pass-bands, each filter being further chosen so that the difference $\Delta f_{1(i)}$ between the lowest unfiltered wanted frequency ($F_{ilNF}$) and the highest frequency in the second frequency band (RX) is greater than or equal to the difference $\Delta f_{2(i)}$ between said lowest unfiltered wanted frequency ($F_{ilNF}$) and the upper frequency limit ($F_{BiSUP}$) of the filter, and
- selector means (6) for selecting one of the band-pass filters of said set according to the carrier frequency ($F_0$)

of said signal to be transmitted.

4. A filter system according to any preceding claim, **characterised in that** the selector means select the filter whose pass-band ($B_i$) includes the carrier frequency ($F_0$) of the signal to be transmitted.

5. A filter system according to either claim 2 or claim 3, **characterised in that** said selector means (6) are between the output of the generator means (3) and the input of said set (5).

6. A filter system according to either claim 2 or claim 3, **characterised in that** said selector means are between the output of said set and the input of the power amplification means.

7. A filtering method for use in a transmit subsystem of a transceiver transmitting radio frequency signals at a carrier frequency ($F_0$) in a first frequency band (TX) and receiving radio frequency signals in a second frequency band (RX) separate from the first frequency band, said transmit subsystem including generator means (3) for generating a signal to be transmitted at said carrier frequency ($F_0$) and power amplification means (4) for amplifying the power of said signal, said power amplification means delivering, in addition to an amplified signal to be transmitted at the carrier frequency ($F_0$), an unwanted signal whose frequency depends on the carrier frequency ($F_0$) and on the frequency ($F_b$) of a noise signal, which method is **characterised in that** it consists of the filtering signals on the input side of said power amplification means (4) so that the frequency of said unwanted signal is excluded from the second frequency band (RX).

**Patentansprüche**

1. Filtervorrichtung in einer Sendekette eines Sende-Empfangsgeräts, das Hochfrequenzsignale auf einer Trägerfrequenz ($F_0$) sendet, die in einem ersten Frequenzband (TX) liegt, und das Hochfrequenzsignale in einem zweiten Frequenzband (RX) empfängt, das sich von dem ersten Frequenzband unterscheidet, wobei die genannte Sendekette Signalerzeugungsmittel (3) zur Erzeugung eines Signals umfasst, das auf der genannten Trägerfrequenz ($F_0$) übertragen wird, sowie Leistungsverstärkungsmittel (4) für das genannte Signal, die neben dem verstärkten, auf der Trägerfrequenz ($F_0$) zu übertragenden Signal ein Störsignal liefern, dessen Frequenz von der Trägerfrequenz ($F_0$) und der Frequenz eines Rauschsignals ($F_b$) abhängt, **dadurch gekennzeichnet, dass** sie Filtermittel (5, 6) umfasst, die zwischen den genannten Signalerzeugungsmitteln (3) für das zu übertragende Signal und den genannten Leistungsverstärkungsmitteln (4) angeordnet und so ausgelegt sind, dass die Frequenz des genannten Störsignals in dem zweiten Frequenzband (RX) ausgeschlossen wird.

2. Filtervorrichtung gemäß Anspruch 1, **dadurch gekennzeichnet, dass** das erste Frequenzband (TX) niedriger ist als das zweite Frequenzband (RX) und die genannten Filtermittel Folgendes umfassen:

   - eine Einheit (5) mit zumindest zwei parallel gekoppelten Bandfiltern (i), wobei jeder Filter einen Durchlassbereich ($B_i$) aufweist, so dass das gesamte erste Frequenzband (TX) von der Summe der Durchlassbereiche abgedeckt wird, und jeder Filter außerdem so gewählt wurde, dass die Differenz $\Delta f_{1(i)}$ zwischen der niedrigsten Frequenz des zweiten Frequenzbandes (RX) und der höchsten, ungefilterten Nutzfrequenz ($F_{iSUP}$) größer oder gleich der Differenz $\Delta f_{2(i)}$ zwischen der genannten höchsten, ungefilterten Nutzfrequenz ($F_{iSUP}$) und der Frequenzuntergrenze ($F_{BiINF}$) des Filters ist.
   - Filterauswahlmittel (6) zur Auswahl eines der Bandfilter aus der genannten Einheit gemäß der Trägerfrequenz ($F_0$) des genannten zu übertragenden Signals.

3. Filtervorrichtung gemäß Anspruch 1, **dadurch gekennzeichnet, dass** das erste Frequenzband (TX) höher ist als das zweite Frequenzband (RX) und die genannten Filtermittel Folgendes umfassen:

   - eine Einheit (5) mit zumindest zwei parallel gekoppelten Bandfiltern (i), wobei jeder Filter einen Durchlassbereich ($B_i$) aufweist, so dass das gesamte erste Frequenzband (TX) von der Summe der Durchlassbereiche abgedeckt wird, und jeder Filter außerdem so gewählt wurde, dass die Differenz $\Delta f_{1(i)}$ zwischen der niedrigsten, ungefilterten Nutzfrequenz ($F_{iINF}$) und der höchsten Frequenz des zweiten Frequenzbandes (RX) größer oder gleich der Differenz $\Delta f_{2(i)}$ zwischen der genannten niedrigsten, ungefilterten Nutzfrequenz ($F_{iINF}$) und der Frequenzobergrenze ($F_{BiSUP}$) des Filters ist.
   - Filterauswahlmittel (6) zur Auswahl eines der Bandfilter aus der genannten Einheit gemäß der Trägerfrequenz ($F_0$) des genannten zu übertragenden Signals.

**4.** Filtervorrichtung gemäß einem der vorgenannten Ansprüche, **dadurch gekennzeichnet, dass** die Filterauswahlmittel den Filter wählen, dessen Durchlassbereich ($B_i$) die Trägerfrequenz ($F_0$) des zu übertragenden Signals umfasst.

**5.** Filtervorrichtung gemäß einem der Ansprüche 2 oder 3, **dadurch gekennzeichnet, dass** die genannten Filterauswahlmittel (6) zwischen dem Ausgang der Signalerzeugungsmittel (3) und dem Eingang der genannten Einheit (5) platziert sind.

**6.** Filtervorrichtung gemäß einem der Ansprüche 2 oder 3, **dadurch gekennzeichnet, dass** die genannten Filterauswahlmittel zwischen dem Ausgang der genannten Einheit und dem Eingang der Leistungsverstärkungsmitteln angeordnet sind.

**7.** Filterverfahren in einer Sendekette eines Sende-Empfangsgeräts, das Hochfrequenzsignale auf einer Trägerfrequenz ($F_0$) sendet, die in einem ersten Frequenzband (TX) liegt und das Hochfrequenzsignale in einem zweiten Frequenzband (RX) empfängt, das sich von dem ersten Frequenzband unterscheidet, wobei die genannte Sendekette Signalerzeugungsmittel (3) zur Erzeugung eines Signals umfasst, das auf der genannten Trägerfrequenz ($F_0$) übertragen wird, sowie Leistungsverstärkungsmittel (4) für das genannte Signal, die neben dem verstärkten, auf der Trägerfrequenz ($F_0$) zu übertragenden Signal ein Störsignal liefern, dessen Frequenz von der Trägerfrequenz ($F_0$) und der Frequenz eines Rauschsignals ($F_b$) abhängt, **dadurch gekennzeichnet, dass** es eine den genannten Leistungsverstärkungsmitteln (4) vorgeschaltete Signalfilterung umfasst, so dass die Frequenz des genannten Störsignals in dem zweiten Frequenzband (RX) ausgeschlossen wird.

FIG. 1

FIG. 2

# FIG. 3

FIG. 4

**EP 1 130 790 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0944175 A1